# EUROPÄISCHE PATENTSCHRIFT

(11) **EP 1 044 787 B1**
(45) Veröffentlichungstag und Bekanntmachung des Hinweises auf die Patenterteilung: **05.03.2003**
(21) Anmeldenummer: 00810222.0
(22) Anmeldetag: 16.03.2000
(51) Int. Cl.: B29C 53/24, B21D 31/04

(54) **Verfahren zur Formgebung von streifenförmigen Folien**
Process for forming of strip like sheets
Procédé pour la fabrication des bandes en accordéon

(30) Priorität: 15.04.1999 EP 99810312
(43) Veröffentlichungstag der Anmeldung: 18.10.2000
(73) Patentinhaber: Sulzer Chemtech AG, 8404 Winterthur (CH)
(72) Erfinder: Bär, Martin, 8442 Hettlingen (CH)
(74) Vertreter: Sulzer Management AG

(56) Entgegenhaltungen:
- EP-A- 0 739 846
- WO-A-97/16347
- GB-A- 1 354 159
- US-A- 3 470 053
- US-A- 3 513 054

## Beschreibung

Die Erfindung betrifft ein Verfahren zur Formgebung von streifenförmigen Folien sowie eine Anlage zum Durchführen des Verfahrens.

Aus der WO 97/16247 ist eine Stoffaustauschkolonne mit einer strukturierten Packung bekannt, die aus übereinander angeordneten, jeweils eine Kreuzkanalstruktur aufweisenden Packungselementen aufgebaut ist, wobei die Kanäle in einer oberen sowie unteren Randzone eines solchen Packungselements mit einer besonderen Form ausgebildet sind. Aufgrund der besonderen Ausformung des Packungselements ergibt sich für ein die Packung durchströmendes Gas, das von einem Packungselement zu einem benachbarten übertritt, ein reduzierter Strömungswiderstand.

Aufgabe der Erfindung ist es, ein Verfahren zu schaffen, mit dem sich Folien geeignet formen lassen, so dass mit solchen Folien die genannten Packungen herstellbar sind. Diese Aufgabe wird durch das im Anspruch 1 definierte Verfahren gelöst. Unter dem Begriff "streifenförmige Folie" wird dabei jeder Materialstreifen verstanden, der nach dem erfindungsgemässen Verfahren form- und umformbar ist. Ein solcher Materialstreifen kann beispielsweise auch aus einem Drahtgewebe oder einem Streckmetall bestehen.

Das Verfahren zur Formgebung von streifenförmigen Folien (2), insbesondere für strukturierte Packungen, umfasst folgende Schritte:
a) Ein Folienstreifen wird von einem Folienvorrat kontinuierlich zu Formgebungseinheiten gefördert.
b) Der Folienstreifen wird in einer ersten Formgebungseinheit plissiert. Dabei werden Kanten hergestellt, die zu Rändern des Folienstreifens einen Neigungswinkel mit konstantem Wert bilden.
c) Nach einer Förderung des plissierten Streifens zu mindestens einer weiteren Formgebungseinheit wird dieser in einem Schritt oder mehreren Schritten umgeformt. Dabei werden in Randzonen ausserhalb einer Mittelzone des Streifens die Kanten mittels eines Walzenpaars durch plastische Verformung beseitigt und simultan durch gekrümmte Kanten ersetzt. Die Neigungswinkel der gekrümmten Kanten nehmen von der Mittelzone zu den Streifenrändern kontinuierlich zu.

Die abhängigen Ansprüche 2 bis 7 betreffen vorteilhafte Ausführungsformen des erfindungsgemässen Verfahrens. Gegenstand der Ansprüche 8 bis 10 ist eine Anlage zum Durchführen des Verfahrens.

Nachfolgend wird die Erfindung anhand der Zeichnungen erläutert. Es zeigen:
- Fig. 1: eine Anlage zum Durchführen des erfindungsgemässen Verfahrens,
- Fig. 2: eine Randzone, die nach dem erfindungsgemässen Verfahren umgeformt worden ist,
- Fig. 3: das Querschnittsprofil eines Walzenpaars,
- Fig. 4: die untere Walze des Walzenpaars der Fig. 3 mit zwei axial angeordneten Umformteilen,
- Fig. 5: eine umgeformte Randzone einer Folie, deren Umformung mit drei Umformschritten ausgeführt worden ist,
- Fig. 6: eine seitliche Ansicht der Folie der Fig. 5 mit einer Darstellung der Geometrieänderung bei den drei Umformschritten und
- Fig. 7: ein Fragment einer Folie, die eine Rillierung sowie Perforierung aufweist.

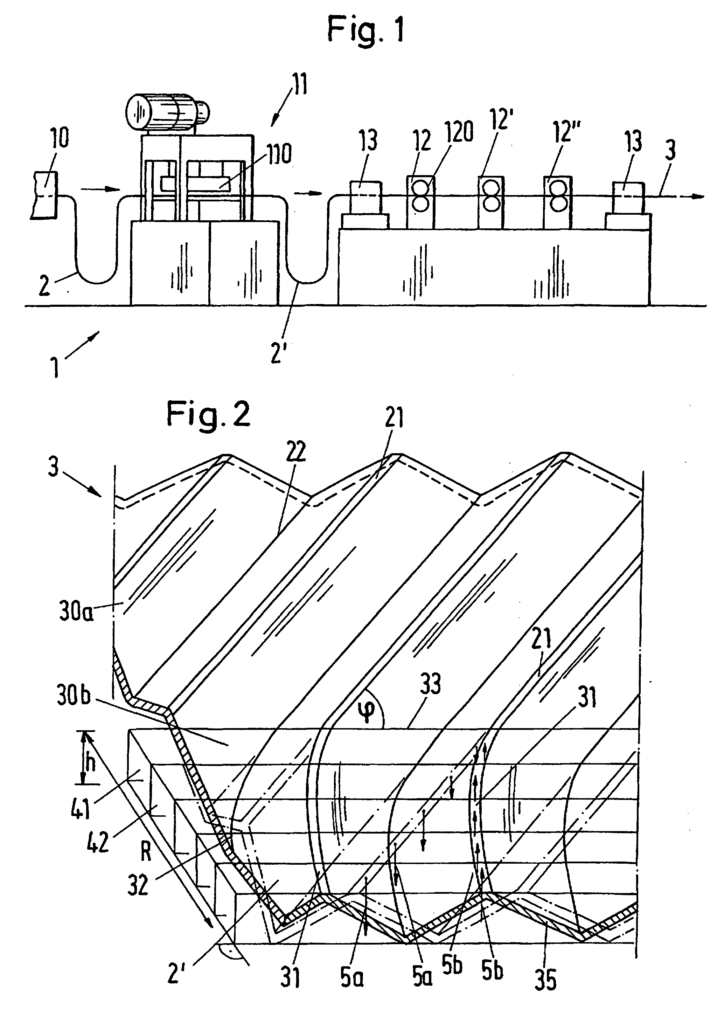

Die in Fig. 1 dargestellte Anlage 1 umfasst folgende Komponenten: eine Einrichtung 10 zum kontinuierlichen Fördern eines Folienstreifens 2 von einem nicht dargestellten Folienvorrat zu Formgebungseinheiten 11, 12, 12', 12"; eine erste Formgebungseinheit 11 zum Plissieren des Folienstreifens 2, wobei ein gewellter oder zickzackförmiger Folienstreifen 2' geformt wird; drei Formgebungseinheiten 12, 12', 12" zum Umformen des Folienstreifens 2' mittels jeweils eines Walzenpaares 120; Vorrichtungen 13 zum Abziehen der geformten Folienstreifen 2' und 3. Die Plissierung kann mit einem Paar von zahnradartigen Walzen oder durch Pressen mit einem oszillierenden Umformwerkzeug 110 durchgeführt werden. Details zum Verfahren des Plissierens (oder "Schrägplissierens") findet man in der EP-A 0 739 846.

Fig. 2 zeigt einen Teil eines plissierten Folienstreifens 3, der aus einem Folienstreifen 2' durch Umformung einer Randzone 30b der Breite R hervorgegangen ist. Eine zweite Randzone, die ebenfalls umgeformt ist, fehlt in der Zeichnung. Nur eine Mittelzone 30a oder ein Teil dieser Zone ist abgebildet. In der Mittelzone 30a mit geraden, parallelen Kanten 21, 22 liegt die urspüngliche Plissierung des Folienstreifens 2' vor. In der Randzone 30b ist die urspüngliche Plissierung strichpunktiert angegeben. Eine äussere Schnittkante 35 der Randzone 30b verläuft parallel zu einem nicht dargestellten Rand des Folienstreifens 2'. Die Kanten 21, 22 schliessen mit einer Geraden 33, die sich parallel zur Schnittkante 35 erstreckt, einen Neigungswinkel ϕ ein. Kanten 31, 32 der Randzone 30b, die auf gekrümmten Kurven liegen, bilden variable Neigungswinkel, die durch Tangenten an die genannten Kurven und die Gerade 33 aufgespannt werden. Diese variablen Neigungswinkel nehmen von der Mittelzone 30a zum Streifenrand (oder Schnittkante 35) kontinuierlich zu.

Der Folienstreifen 3 hat eine Höhe h; diese ergibt die Lagenbreiten einer Packung mit Kreuzkanalstruktur, die aus Stücken des Folienstreifens 3 und durch einen lagenweisen Aufbau hergestellt wird.

Zur Erläuterung der Umformung ist in Fig. 2 die Randzone 30b in mehrere Streifen unterteilt, die entsprechend ein scheibenförmiges Volumen der Höhe h und Breite R in stangenförmige Teilvolumina 41, 42,... unterteilen. Mit Pfeilen 5a und 5b, die den Teilvolumina 41, 42, ... zugeordnet sind, ist für eine Kante 21 bzw. 31 dargestellt, wie sich bei der Umformung einzelne Flächenelemente der horizontal liegenden Folie 2' vertikal verschieben. Die Längen der Pfeile 5a und 5b zeigen qualitativ, wie gross die Verschiebungen der Flächenelemente sind; diese Längen sind angenähert proportional zu den bei den Verschiebungen zurückgelegten Wege. Durch eine plastische Verformung, die mittels eines Walzenpaars ausgeführt wird, werden die Kanten 21 der ursprünglichen Plissierung beseitigt (Pfeile 5a) und durch gekrümmte Kanten 31 (Pfeile 5b) ersetzt. Das Eliminieren der Kante 21 und die benachbart stattfindende Neubildung der Kante 31 geschehen praktisch simultan.

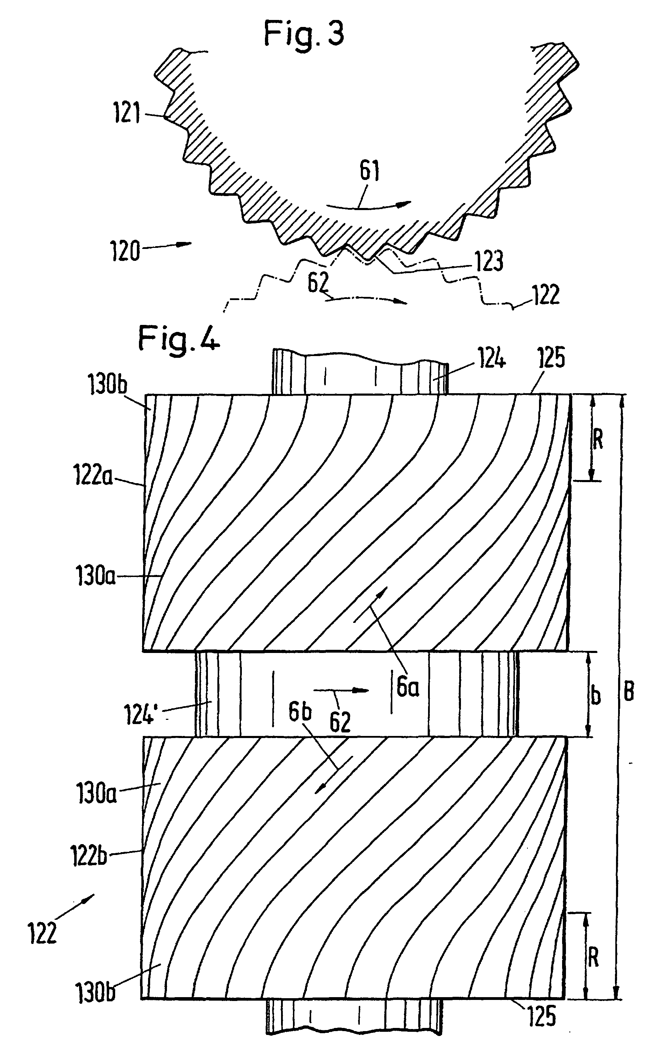

Fig. 3 zeigt einen Querschnitt durch die obere Walze 121 des Walzenpaars 120. Das Zahnprofil der unteren Walze 122 ist strichpunktiert dargestellt. Zwischen den beiden Walzen 121 und 122 befindet sich ein einstellbarer Spalt 123, der der Dicke der Folie 2' entsprechend eingestellt wird. Die Drehrichtungen sind durch die Pfeile 61 und 62 dargestellt.

Die Walzen 121, 122 können statt aus einem massiven Stück auch aus einer Vielzahl von Lamellen hergestellt werden, mit denen die Walzenprofilierung einfach ausgebildet werden kann. Alle Lamellen weisen jeweils ein gleiches Zahnradprofil auf. Benachbarte Lamellen sind um Winkel versetzt nebeneinander angegeordnet, wobei die Winkel durch die erforderliche Form der Walzenprofilierung und die Lamellendicken festgelegt sind.

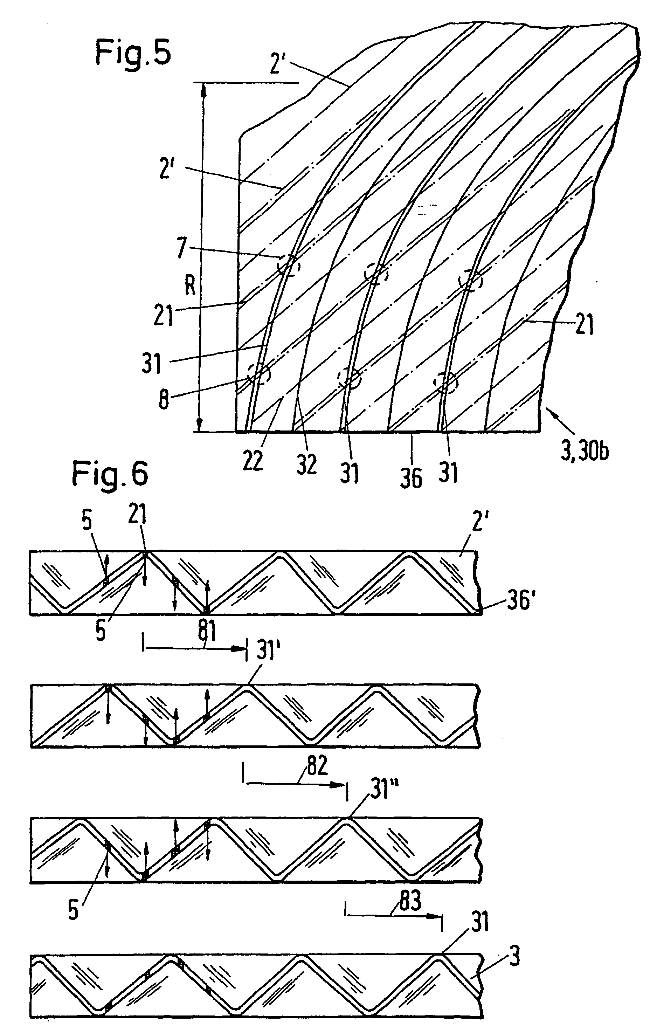

Die Walzen 121 bzw. 122 umfassen mit Vorteil zwei axial angeordnete Umformteile 122a und 122b auf einer Antriebswelle 124: siehe Fig. 4, in der die untere Walze 122 der Fig. 3 abgebildet ist. Jedes Umformteil 122a, 122b enthält ein Umformprofil 130b zur Umformung der Randzonen 30b (Breite R) und ein Profil 130a, das ohne Umformung in das durch die Plissierung gegebene Profil des zu bearbeitenden Folienstreifens eingreift. Zwischen den Umformteilen 122a und 122b, die auf einem zylindrischen Trägerkörper 124' befestigt sind, befindet sich eine Ringnut mit einstellbarer Nutbreite b. Die Umformung wird bei einer eingestellten Nutbreite b durchgeführt, für die der umgeformte Folienstreifen 3 trotz einer transversalen Ausdehnung der Randzonen innerhalb der Umformprofile gehalten wird. Diese transversale Ausdehnung, die rund 1 bis 3 mm betragen kann, entsteht aufgrund der plastischen Umformung. Vorzugsweise wird die Nutbreite b so eingestellt, dass beim Austritt aus dem Walzenpaar 120 die Folienränder 36 (siehe Fig. 5) auf die äusseren Ränder 135 der Umformprofile 130b zu liegen kommen, so dass also die Walzenbreite B gleich gross wie die Breite des Folienstreifens 3 nach der Umformung ist. Zur Einstellung der Breite B konstruiert man den Trägerkörper 124' sowie Verbindungsmittel zwischen diesem Trägerkörper 124' und den Umformteilen 121, 122 geeignet. Die Breite B wird zweckmässigerweise dadurch vergrössert, dass die beiden Umformteile 121 und 122 gegenläufig entlang den in Fig. 4 angegebenen Pfeilen 6a und 6b verschoben werden.

Am Austritt des Walzenpaars 120 muss der Folienstreifen 3 an den Rändern so geführt werden, dass eine Bewegung des Streifens 3 quer zur Förderrichtung verhindert wird.

Fig. 5 zeigt den Randbereich eines Folienstreifens 3, der mittels dreier Umformschritte aus einem plissierten Folienstreifen 2' (strichpunktierte Kanten 21 und 22) hergestellt ist. Sobald eine bei der Umformung gebildete Kante 31, die oben liegt, eine benachbarte Kante 21 des ursprünglichen Folienstreifens 2', die ebenfalls oben liegt, an einer Stelle 7 kreuzt, so ist mindestens ein zweiter Umformschritt nötig. Pro Umformschritt können jeweils nur zwei unmittelbar benachbarte Kanten 21 (oben liegend) und 22 (unten liegend) simultan umgeformt werden. Da im dargestellten Beispiel die Kante 31 zwei benachbarte oben liegende Kanten 21 kreuzt, nämlich an den Stellen 7 und 8, sind gesamthaft drei Umformschritte erforderlich.

Bei den Umformschritten verschiebt sich ein Zickzackprofil des Streifenrands 36 sukzessive gegen rechts: siehe Fig. 6. Im obersten Teilbild ist der Rand 36' des noch nicht umgeformten Folienstreifens 2' gezeigt. Das zweite Teilbild zeigt das verschobene Zickzackprofil nach dem ersten Umformschritt. Der horizontale Pfeil 81 gibt an, wie die Kante 21 neu als Kante 31' erscheint. Die vertikalen Pfeile 5 geben an, wie aufgrund der Umformung Flächenelemente nach oben oder nach unten verschoben werden. Die Pfeile 82 und 83 stellen die weiteren Verschiebungen der Kanten 31' bzw. 31" bei dem zweiten und dritten Umformschritt dar, wobei beim dritten Schritt die Kante 31" in die Kante 31 der Fig. 5 übergeht.

Beim letzten Umformschritt wird die Randzone 30b so ausgebildet, dass an den Folienrändern 36 der Neigungswinkel grösser als 80° ist und dass er vorzugsweise 90° beträgt.

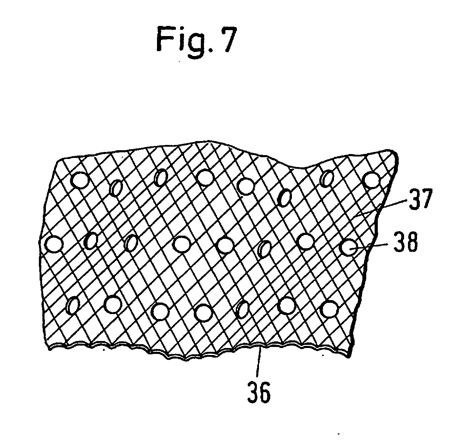

Bei der Plissierung kann für den Neigungswinkel ϕ des Folienstreifens 2' ein Wert im Bereich von 20° bis 70° gewählt werden. Es können Folien verwendet werden, die eine Feinstrukturierung beispielsweise in Form einer Rillierung und/oder eine Perforierung beispielsweise durch rasterartig angeordnete Löcher aufweisen. Fig. 7 zeigt eine gewellte Folie mit einer Rillierung 37, die durch sich kreuzende Rinnen gebildet ist. Diese Folie ist auch durch rasterartig angeordnete Löcher 38 perforiert. Die beim erfindungsgemässen Verfahren durchgeführte Umformung lässt eine gegebene Feinstrukturierung weitgehend intakt.

## Patentansprüche

1. Verfahren zur Formgebung von streifenförmigen Folien (2), folgende Schritte umfassend:
a) kontinuierliche Förderung eines Folienstreifens (2) von einem Folienvorrat zu Formgebungseinheiten,
b) Plissierung des Folienstreifens (2) in einer ersten Formgebungseinheit (11), wobei Kanten (21, 22) hergestellt werden, die zu Rändern (36) des Folienstreifens einen Neigungswinkel mit konstantem Wert bilden, und
c) - nach einer Förderung des plissierten Streifens (2') zu mindestens einer weiteren Formgebungseinheit (12) - Umformung in einem Schritt oder mehreren Schritten, wobei in Randzonen (30b) ausserhalb einer Mittelzone (30a) des Streifens die Kanten (21, 22) mittels eines Walzenpaars (120) durch plastische Verformung beseitigt und simultan durch gekrümmte Kanten (31, 32) ersetzt werden, deren Neigungswinkel von der Mittelzone zu den Streifenrändern kontinuierlich zunehmen.

2. Verfahren nach Anspruch 1, **dadurch gekennzeichnet, dass** für den Neigungswinkel (ϕ) der Plissierung ein Wert im Bereich von 20° bis 70° gewählt wird und dass als Folien (2) form- und umformbare Materialstreifen verwendet werden können, die eine Feinstrukturierung beispielsweise in Form einer Rillierung (37) und/oder eine gleichmässige Perforierung beispielsweise durch rasterartig angeordnete Löcher (38) aufweisen.

3. Verfahren nach Anspruch 1 oder 2, **dadurch gekennzeichnet, dass** jede der Walzen (121, 122) der Walzenpaare (120) zwei axial angeordnete Umformteile (122a, 122b) umfasst, die jeweils ein Umformprofil (130b) zur Umformung der Randzonen (30b) enthalten und zwischen denen eine Ringnut mit einstellbarer Nutbreite (b) offen bleibt, und dass die Umformung bei einer eingestellten Nutbreite durchgeführt wird, für die der umgeformte Folienstreifen (3) trotz transversalen Ausdehnungen der Randzonen innerhalb der Umformprofile gehalten wird, und vorzugsweise so gehalten wird, dass beim Austritt aus dem Walzenpaar die Folienränder (36) auf die äusseren Ränder der Umformprofile (125) zu liegen kommen.

4. Verfahren nach einem der Ansprüche 1 bis 3, **dadurch gekennzeichnet, dass** pro Umformschritt jeweils nur zwei unmittelbar benachbarte Kanten (21, 22) des Folienstreifens (2') simultan umgeformt werden.

5. Verfahren nach einem der Ansprüche 1 bis 4, **dadurch gekennzeichnet, dass** am Austritt des Walzenpaars (120) der Folienstreifen (3) an den Rändern (36) so geführt wird, dass eine Bewegung des Streifens quer zur Förderrichtung verhindert wird.

6. Verfahren nach einem der Ansprüche 1 bis 5, **dadurch gekennzeichnet, dass** die Plissierung mit einem Paar von zahnradartigen Walzen oder durch Umformen mit einem oszillierenden Werkzeug (110) durchgeführt wird.

7. Verfahren nach einem der Ansprüche 1 bis 6, **dadurch gekennzeichnet, dass** beim letzten Umformschritt die Randzone (30b) so ausgebildet wird, dass an den Folienrändern (36) der Neigungswinkel grösser als 80° ist und dass er vorzugsweise 90° beträgt.

8. Anlage zum Durchführen des Verfahrens gemäss einem der Ansprüche 1 bis 7, folgende Komponenten umfassend:
- eine Einrichtung (10) zum kontinuierlichen Fördern eines Folienstreifens (2) von einem Folienvorrat zu Formgebungseinheiten,
- eine erste Formgebungseinheit (11) zum Plissieren des Folienstreifens,
- mindestens eine zweite Formgebungseinheit (12) zum Umformen des plissierten Folienstreifens (2') mittels eines Walzenpaares (120), das in einer Mittelzone (130a) nicht umformende und in Randzonen (130b) umformende Profilierungen aufweist, und
- mindestens eine Vorrichtung (13) zum Abziehen des geformten Folienstreifens (3).

9. Anlage nach Anspruch 8, **dadurch gekennzeichnet, dass** die Walzen (121, 122) für das Umformen einstellbare Breiten (B) haben, insbesondere gemäss Anspruch 3 einstellbare Breiten haben, und dass für jedes Walzenpaar (120) ein Spalt (123) zwischen den Walzen ebenfalls einstellbar ist.

10. Anlage nach Anspruch 8 oder 9, **dadurch gekennzeichnet, dass** die Walzen (121, 122) aus einem massiven Stück oder aus einer Vielzahl von Lamellen hergestellt sind, wobei alle Lamellen jeweils ein gleiches Zahnradprofil aufweisen, benachbarte Lamellen um Winkel versetzt nebeneinander angegeordnet sind und die für die Winkel zu wählenden Werte durch die erforderliche Form der Walzenprofilierung und die Lamellendicken festgelegt sind.

## Claims

1. Method for the shaping of strip-like films (2), comprising the following steps:
a) continuous forwarding of a film strip (2) from a film supply to shaping units,
b) pleating of the film strip (2) in a first shaping unit (11), with edges (21, 22) being produced which form an angle of inclination to the edges (36) of the film strip having a constant value, and
c) - after a forwarding of the pleated strip (2') to at least one further shaping unit (12) - reshaping in one or more steps, wherein the edges (21, 22) are eliminated through plastic deformation by means of a roller pair (120) in edge zones (30b) outside of a middle zone (30a) of the strip and are at the same time replaced by curved edges (31, 32), the angles of inclination of which continuously increase from the middle zone to the strip edges.

2. Method in accordance with claim 1, **characterized in that** a value in the range from 20° to 70° is chosen for the angle of inclination (ϕ) of the pleating; and **in that** shapeable and reshapeable material strips can be used as films (2) which have a fine structuring for example in the form of a furrowing (37) and/or a uniform perforation for example through holes (38) which are arranged in the manner of a grid.

3. Method in accordance with claim 1 or claim 2, **characterized in that** each of the rollers (121, 122) of the roller pair (120) comprises two axially arranged reshaping parts (122a, 122b) which in each case contain a reshaping profile (130b) for reshaping the edge zones (30b) and between which a ring groove with a settable groove width (b) remains open; and **in that** the reshaping is carried out at a set groove width for which the reshaped film strip (3) is held within the reshaping profile in spite of transversal expansions of the edge zones and is preferably held in such a manner that the film edges (36) come to lie on the outer edges of the reshaping profile (125) when emerging from the roller pair.

4. Method in accordance with any one of the claims 1 to 3, **characterized in that** for each reshaping step in each case only two directly adjacent edges (21, 22) of the film strip (2') are reshaped simultaneously.

5. Method in accordance with any one of the claims 1 to 4, **characterized in that** at its emergence from the roller pair (120) the film strip (3) is guided at the edges (36) in such a manner that a movement of the strip transversely to the forwarding direction is prevented.

6. Method in accordance with any one of the claims 1 to 5, **characterized in that** the pleating is carried out with a pair of gear-like rollers or through reshaping with an oscillating tool (110).

7. Method in accordance with any one of the claims 1 to 6, **characterized in that** in the last reshaping step the edge zone (30b) is formed in such a manner that at the film edges (36) the angle of inclination is greater than 80° and that it preferably amounts to 90°.

8. Plant for carrying out the method in accordance with any one of the claims 1 to 7, comprising the following components:
- a device (10) for the continuous forwarding of a film strip (2) from a film supply to shaping units,
- a first shaping unit (11) for pleating the film strip,
- at least one second shaping unit (12) for reshaping the pleated film strip (2') by means of a roller pair (120) which has non reshaping profilings in a middle zone (130a) and reshaping profilings in end zones (130b), and
- at least one apparatus (13) for drawing off the shaped film strip (3).

9. Plant in accordance with claim 8, **characterized in that** the rollers (121, 122) have settable widths (B) for the reshaping, in particular have widths which are settable in accordance with claim 3; and **in that** for each roller pair (120) a gap (123) can likewise be set between the rollers.

10. Plant in accordance with claim 8 or claim 9, **characterized in that** the rollers (121, 122) are manufactured from a solid piece or from a large number of lamella, with all lamella in each case having a same gear profile, adjacent lamella being arranged adjacently with a displacement by angles and with the values to be chosen for these angles being determined by the required shape of the roller profiling and the lamella thickness.

## Revendications

1. Procédé de formage de feuilles (2) en forme de bande, comprenant les étapes suivantes :
a) convoyage continu d'une bande de feuilles (2) d'une réserve de feuilles à des unités de formage,
b) plissage d'une bande de feuille (2) dans une première unité de formage (11), où des arêtes (21,22) sont réalisées qui forment relativement aux bords (36) de la bande de feuille un angle d'inclinaison d'une valeur constante et
c) - après un convoyage de la bande plissée (2'') à au moins une autre unité de formage (12) - déformation en une ou plusieurs étapes, où dans des zones de bords (30b) à l'extérieur d'une zone médiane (30a) de la bande, les arêtes (21,22) sont éliminées au moyen d'une paire de rouleaux (120) par déformation plastique et sont remplacées simultanément par des arêtes courbées (31,32), dont les angles d'inclinaison augmentent continuellement à partir de la zone médiane vers les bords de bande.

2. Procédé selon la revendication 1, **caractérisé en ce que** pour l'angle d'inclinaison (ϕ) du plissage, une valeur dans la plage de 20° à 70° est sélectionnée et **en ce que**, comme feuilles (2) des bandes de matériaux formables et déformables peuvent être utilisées qui présentent une structuration fine, par exemple sous la forme d'un rainurage (37) et/ou une perforation régulière par exemple par des trous (38) disposés en forme de trame.

3. Procédé selon la revendication 1 ou 2, **caractérisé en ce que** chacun des rouleaux (121,122) des paires de rouleaux (120) comprend deux parties de déformation (122a, 122b) disposées axialement qui comportent chacune un profilé de déformation (130b) pour la déformation des zones de bord (30b) et entre lesquels, une rainure annulaire d'une largeur de rainure réglable (b) reste ouverte et **en ce que** la déformation est effectuée à une largeur de rainure réglée pour laquelle la bande de feuille déformée (3), malgré des extensions transversales des zones de bord est maintenue à l'intérieur des profilés de déformation et est maintenue de préférence de telle sorte que lors de la sortie de la paire de rouleaux, les bords de feuille (36) viennent à se situer sur les bords extérieurs des profilés de déformation (125).

4. Procédé selon l'une des revendications 1 à 3, **caractérisé en ce que** par étape de déformation, respectivement seulement deux arêtes directement avoisinantes (21, 22) de la bande de feuille (2') sont déformées simultanément.

5. Procédé selon l'une des revendications 1 à 4, **caractérisé en ce que**, à la sortie de la paire de rouleaux (120), la bande de feuille (3) est guidée aux bords (36) de façon à empêcher un déplacement de la bande transversalement à la direction de convoyage.

6. Procédé selon l'une des revendications 1 à 5, **caractérisé en ce que** le plissage est exécuté avec une paire de rouleaux semblable à des roues dentées ou par déformation avec un outil oscillant (110).

7. Procédé selon l'une des revendications 1 à 6, **caractérisé en ce que** lors de la dernière étape de déformation, la zone de bord (30b) est réalisée de telle sorte qu'aux bords de la feuille (36), l'angle d'inclinaison est plus grand que 80° et qu'il est de préférence de 90°.

8. Installation pour la mise en oeuvre du procédé selon l'une des revendications 1 à 7, comprenant les composants suivants :
- une installation (10) pour le convoyage continu d'une bande de feuille (2) d'une réserve de feuilles à des unités de formage,
- une première unité de formage (11) pour le plissage de la bande de feuille,
- au moins une deuxième unité de formage (12) pour déformer la bande de feuille plissée (2') au moyen d'une paire de rouleaux (120) qui présente des profilages non déformants dans une zone médiane (130a) et déformants dans des zones de bord (130b) et
- au moins un dispositif (13) pour retirer la bande de feuille formée (3).

9. Installation selon la revendication 8, **caractérisée en ce que** les rouleaux (121,122) pour la déformation ont des largeurs réglables (B), notamment des largeurs réglables selon la revendication 3, et **en ce que** pour chaque paire de rouleaux (120), une fente (123) entre les rouleaux est également réglable.

10. Installation selon la revendication 8 ou 9, **caractérisée en ce que** les rouleaux (121, 122) sont fabriqués en une pièce pleine ou en une pluralité de lamelles, où toutes les lamelles présentent respectivement un profil de roue dentée identique, des lamelles avoisinantes sont disposées les unes à côté des autres en étant décalées selon des angles, et les valeurs à sélectionner pour les angles sont déterminées par la forme requise du profilage des rouleaux et les épaisseurs des lamelles.
